# EUROPEAN PATENT APPLICATION

(11) **EP 4 763 605 A1**
(43) Date of publication of application: **24.06.2026**
(21) Application number: 25223686.4
(22) Date of filing: 16.12.2025
(51) Int. Cl.: B60N 2/42, B60N 2/75

(54) **VEHICLE WITH AN IMPROVED DOOR PANEL**

(30) Priority: 18.12.2024 IT 202400028875
(71) Applicant: FERRARI S.p.A., 41100 Modena (IT)
(72) Inventor: FERETTI, Manuel, 41100 Modena (IT); INGUSCIO, Federica, 41100 Modena (IT)
(74) Representative: Studio Torta S.p.A.

(57) **Abstract**

A door panel of a vehicle (1) with a laminar body (16) having an attaching portion (10) and a supporting portion (11); wherein, the attaching portion (10) is fixed, in use, to the load-bearing structure of a car door (5); wherein, the supporting portion (11) protrudes from the attaching portion (10) and forms the resistant structure of an armrest (9); the supporting portion (11) having a resting wall (17), which is configured to receive at least partially, in use, the arm of a passenger; wherein, the resting wall (17) has a plurality of grooves (25) inclined at a determined angle (α) with respect to a longitudinal axis (X).

## Description

### CROSS-REFERENCE TO RELATED APPLICATIONS

This patent application claims priority from Italian patent application no. 102024000028875 filed on December 18, 2024, the entire disclosure of which is incorporated herein by reference.

### TECHNICAL FIELD

The invention relates to a vehicle with an improved door panel.

### PRIOR ART

It is known that the car door of a vehicle comprises a central medallion shaped to form an armrest capable of receiving, at least partially, the arm of a passenger. Generally, the armrest is in close contact with the passenger.

For the regulations in force, the armrest must deform in the event of impact, so as to allow the dissipation of energy and reduce damage to the passenger in the event of impact.

Therefore, the armrests must have an adequate structural rigidity to support a determined static weight (for example the weight of an arm) and, at the same time, they must be able to deform.

The known solutions have limits in terms of dimensions, weights and freedom of design.

The object of the present invention is to adopt a solution that allows to: reduce the weights of the armrest; increase the deformation capacity; and guarantee greater flexibility from the design point of view (reducing the structural constraints).

### DESCRIPTION OF THE INVENTION

The object of the present invention is to provide a door panel, which allows to overcome the drawbacks described above.

According to the present invention, a door panel and a vehicle are provided according to what is claimed in the appended claims.

The dependent claims define particular embodiments of the invention.

### BRIEF DESCRIPTION OF THE DRAWINGS

In order to better understand the invention, embodiments thereof are described in the following by way of non-limiting example and with reference to the accompanying drawings wherein:
- Figure 1 is a schematic and perspective view, with some parts removed for clarity, of the interior of a vehicle with a door panel according to the present invention;
- Figure 2 is similar to Figure 1, with some parts removed for clarity;
- Figure 3 illustrates a door panel according to the present invention;
- Figures 4 to 7 schematically illustrate possible variants of a detail of a door panel according to the present invention;
- Figure 8 is a force-displacement graph of a door panel of known type;
- Figure 9 is a force-displacement graph of a door panel according to the present invention;
- Figure 10 shows the overlap of the graphs of Figures 8 and 9.

### EMBODIMENTS OF THE INVENTION

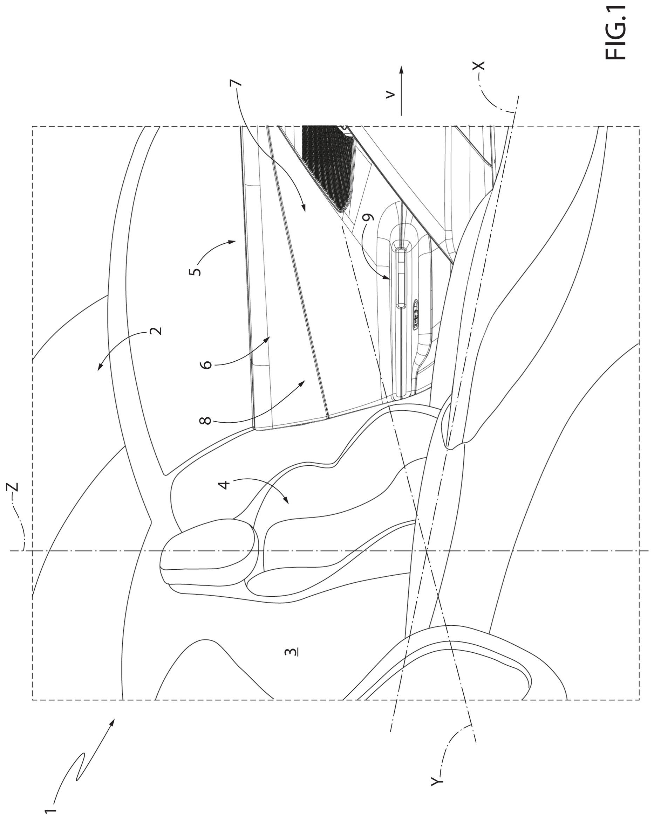

In Figure 1, reference numeral 1 is used to indicate, as a whole, a vehicle 1 comprising, in a known manner: a load-bearing structure 2 (for example a bodywork and/or a chassis), which defines a passenger compartment 3 configured to accommodate at least one driver and possibly one or more passengers accommodated in respective seats 4. The vehicle 1 roto-translates, in a known manner, on a resting plane. In a known manner, the vehicle 1 has: a longitudinal axis X, generally called roll axis; a transversal axis Y, generally called pitch axis; and a vertical axis Z, generally called yaw axis.

Hereinafter, the term "length" and the like means the extension along the longitudinal axis X; the term "width" and the like means the extension along the transversal axis Y; and the term "height" and the like means the extension along the vertical axis Z. The terms "front", "rear", "right", "left", "upper", "lower", "upstream", "downstream", "horizontal", "vertical" and the like are used with reference to the vehicle 1 which advances on the resting plane in the forward direction v. The terms "external", "internal" and the like are used with reference to the passenger compartment 3 in which the driver of the vehicle 1 is housed while driving.

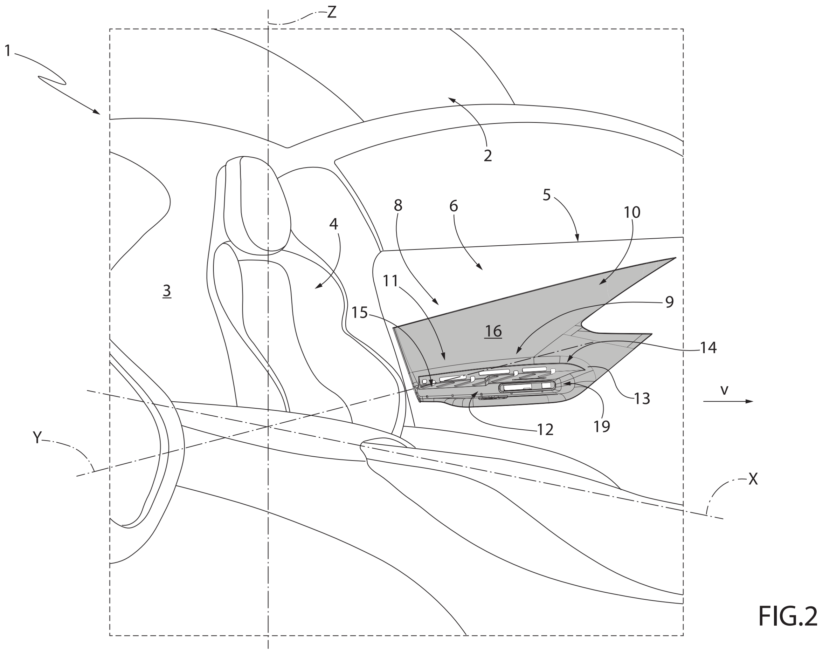

As illustrated in Figures 1 and 2, the vehicle 1 further comprises a car door 5. The left car door 5 is illustrated in Figures 1 and 2. In a known analogous manner and not illustrated, the vehicle 1 further comprises a right car door 5. The shape and dimensions of each car door 5 are variable.

Hereinafter, a generic car door 5 is described, whose features are to be considered valid *mutatis mutandis* for installation on both the right side or on the left side of the vehicle 1.

Each door 5 comprises, in turn, a door panel 6, which constitutes the resistant structure of the car door 5 itself, and an inner lining 7, which covers, at least in part, the door panel 6 and is configured to be, in use, directly in contact with the passenger. The lining 7 can be made of any material.

According to the present invention, the door panel 6 comprises a load-bearing structure (of known type and not illustrated) and a central medallion 8 fixed to the load-bearing structure and having an armrest 9 to allow a passenger to rest their arm.

The central medallion 8 is formed by a laminar body 16 comprising an attaching portion 10, which is configured to engage to the load-bearing structure of the door panel 6, and a supporting portion 11, which is configured to form the resistant structure of the armrest 9, as will be better illustrated in the following.

Hereinafter, the reference axes of the door panel 6 and the central medallion 8 are kept as the same axes X, Y, Z indicated above for the vehicle.

The attaching portion 10 extends mainly parallel to the plane XZ; in other words, the attaching portion 10 extends transversely to the resting plane. The attaching portion 10 is fixed to the load-bearing structure of the door panel 6 (in a known manner and not illustrated). The shape and dimensions of the attaching portion 10 are variable.

The supporting portion 11 protrudes from the attaching portion 10 and extends mainly parallel to the plane XY; in other words, the supporting portion 11 extends parallel to the resting plane. The supporting portion 11 is configured to allow a passenger to rest their arm. The shape and dimensions of the supporting portion 11 are variable.

The supporting portion 11 protrudes from the attaching portion 10 towards the interior of the passenger compartment 3. In particular, the supporting portion 11 has a free end 12, which protrudes inside the passenger compartment near a respective seat 4.

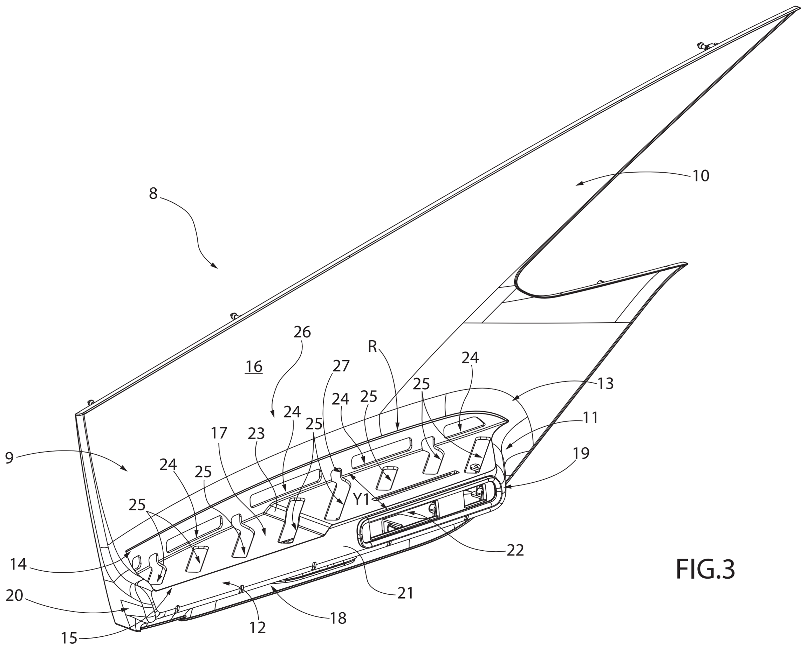

According to what is illustrated in detail in Figure 3, the attaching portion 10 and the supporting portion 11 are connected to each other by means of a connecting portion 13, in particular by means of a curved portion with concavity 22 facing upwards. The radius of curvature of the connecting portion 13 is variable.

The width y1 of the supporting portion 11 is such as to allow at least partially receiving a passenger's arm. The width y1 of the supporting portion 11 is the distance along the transversal axis Y between an attaching edge 14, which is adjacent to the supporting portion 11, and an internal edge 15, which bounds the free end 12 of the supporting portion 11.

The central medallion 8 is made by means of a suitably shaped laminar body 16. For example, the central medallion 8 was obtained by means of moulding.

As illustrated in Figure 3, the supporting portion 11 is an internally hollow box-shaped body. In particular, the supporting portion 11 comprises: an upper resting wall 17 and a lower wall 18 opposite each other; a front edge 19 and a rear edge 20 opposite each other; and a vertical wall 21. The upper wall 17, the lower wall 18 are connected to each other by means of the front edge 19, at a front end, and the rear edge 20, at a rear end. The upper wall 17 and the lower wall 18 are connected to each other by means of the vertical wall 21 at the free end 12.

The upper wall 17, the lower wall 18, the front edge 19 and the rear edge 20 laterally bound a cavity 22.

The shape and dimensions of the upper wall 17, the lower wall 18, the front edge 19 and the rear edge 20 are variable. The upper wall 17 and the lower wall 18 may be different from each other.

According to the illustrated example, the upper wall 17 has a step 23, i.e. a variation of the distance along the vertical axis Z between the upper wall 17 and the lower wall 18. The step 23 is an inclined portion of the upper wall 17. The step 23 extends transversely to the longitudinal axis X. According to a variant not illustrated, the upper wall 17 may have a different number and arrangement of steps with respect to what is illustrated.

The armrest 9 has a plurality of slots 24 made through the supporting portion 11. Each slot 24 is a through slot; in other words, each slot 24 completely crosses the thickness of the laminar body 16, creating a respective opening. Each slot 24 extends mainly along the longitudinal axis X, the shape and dimensions of each slot 24 are variable. According to the illustrated example, the armrest 9 has a plurality of slots 24 aligned with one another and distributed along the longitudinal axis X. The number of slots 24 and the mutual arrangement are variable. The slots 24 may be different from each other.

The armrest 9 also has a lightening pattern 26 of the upper resting wall 17 of the supporting portion 11. The lightening pattern 26 comprises a plurality of grooves 25. In particular, the grooves are distributed along the longitudinal axis X.

Each groove 25 is a through groove, in other words it locally crosses the thickness of the laminar body 16 creating a respective slit, which puts the cavity 22 in connection with the outside.

The number, shape, size and mutual distribution of the grooves 25 are variable. The grooves 25 of the same lightening pattern 26 may be different from one another.

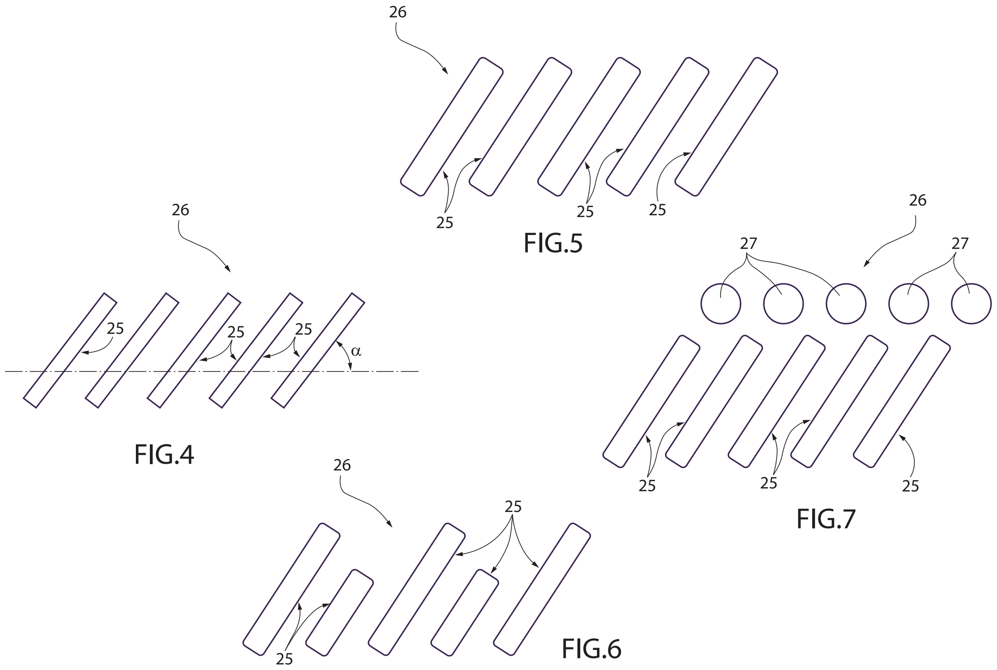

Figures 4 to 7 illustrate, by way of non-limiting example, possible variations of grooves 25 and lightening patterns 26.

In Figure 4, reference number 26 indicates a lightening pattern comprising a plurality of rectilinear grooves 25 equal to one another.

Advantageously, one or more grooves 25 of a lightening pattern 26 extend for a distance greater than 80%, in particular greater than 90%, of the width y1 of the upper wall 17 given by the distance, along the transversal axis Y from the attaching edge 14 to the internal edge 15.

Each groove 25 is inclined with respect to the longitudinal axis X at an angle α. Preferably, the angle α may be between 30° and 60°. According to the example of Figure 4, the grooves 25 of a lightening pattern 26 are equal to one another and are uniformly distributed along the longitudinal axis X.

The groove 25 may have any thickness, for example in Figure 5 a variant of the lightening pattern 26 of Figure 4 is illustrated, in which the rectilinear grooves 25 have a greater thickness than those illustrated in Figure 4.

Figure 6 illustrates a further variant of a lightening pattern 26, which has two types of grooves 25, which are different and alternated with each other. In particular, two adjacent grooves 25 of greater extension are interspersed with each other by a groove 25 of lesser extension.

Advantageously, according to the present invention, a lightening pattern 26 further comprises unloading grooves 27, each of which crosses the connecting portion 13; and/or a determined area of the supporting portion 11.

According to the example illustrated in Figure 2, the rectilinear groove 25 and the unloading groove 27 are in series with each other. In particular, the rectilinear groove 25 and the unloading groove 27 cross, in other words they are communicating with each other, and constitute a comma shape.

The unloading groove 27 is inclined with respect to the rectilinear groove 25. An unloading groove 27 is interposed between two adjacent horizontal slots 24.

According to the example illustrated in Figure 7, the rectilinear groove 25 and the unloading groove 27 are separated. The unloading groove 27 is circular.

With reference to what is illustrated above, each lightening pattern 26 has an alternation of a groove 25 and a full portion of the door panel 6.

The solution of the type described above allows obtaining both a low stiffness in the direction of the transversal axis Y and a high static stiffness in the direction of the vertical axis Z and of the longitudinal axis X. This allows facilitating the deformation of the laminar body 16 along the transversal axis Y in the event of impact and, at the same time, allows having a stiffness along the longitudinal axis X and the vertical axis Z such as to support, in use, the weight of an arm.

Advantageously, the solution of the type described above allows reducing the weights of the door panel 6, maintaining the necessary static resistance requirements. Furthermore, the solution of the type described above allows increasing the deformation of the armrest 9 in the event of an impact and, therefore, guaranteeing the absorption of greater energy. In other words, the solution of the type described above allows obtaining an armrest 9 that is not harmful in the event of impact and that, at the same time, guarantees the necessary static resistance.

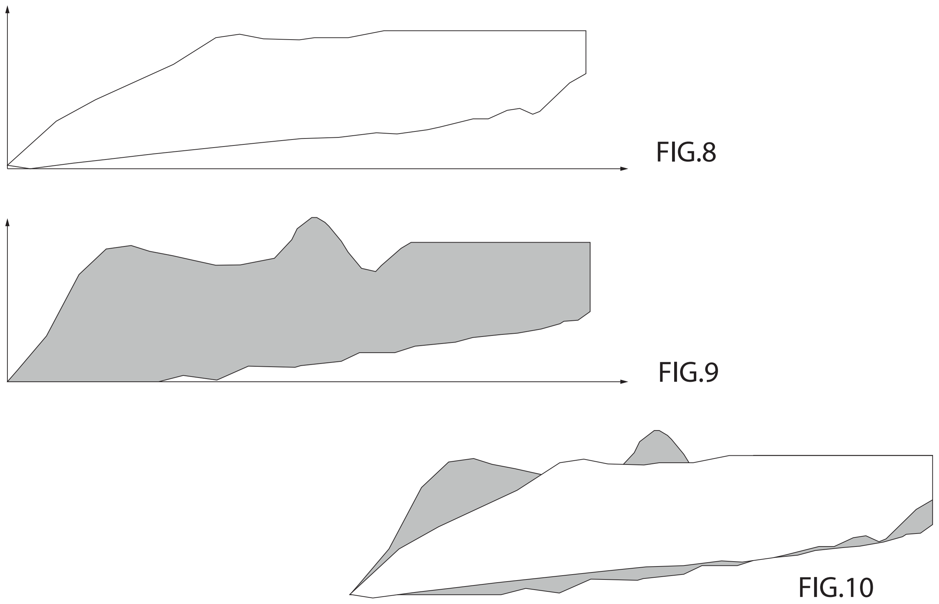

Figures 8 to 10 illustrate force-displacement graphs of two armrests loaded in test phases. In particular, Figure 8 shows the graph of the behaviour of a traditional armrest during the test; while Figure 9 shows the graph of the behaviour of an armrest 9 according to the present invention. As illustrated in Figure 10, from the overlapping of these graphs it is possible to find that an armrest 9 made according to the present invention, with the same shape and weight, absorbs more energy.

## Claims

1. A door panel for a vehicle (1) comprising a laminar body (16) configured to form, in use, a central medallion (8) of a car door (5) having an armrest (9); wherein, the laminar body (16) has a longitudinal axis (X), a transversal axis (Y), and a vertical axis (Z); wherein, the laminar body (16) comprises an attaching portion (10) and a supporting portion (11); wherein, the attaching portion (10) is fixed, in use, to a load-bearing structure of a car door (5); wherein, the supporting portion (11) protrudes from the attaching portion (10) and forms the resistant structure of said armrest (9); the supporting portion (11) having a resting wall (17), which is configured to receive at least partially, in use, the arm of a passenger; wherein, the resting wall (17) has a lightening pattern (26), which has a plurality of first grooves (25); wherein, each first groove (25) is inclined at an angle (α) with respect to the longitudinal axis (X).

2. A door panel according to claim 1, wherein said angle (α) is between 20° and 60° degrees, in particular it is 45°.

3. A door panel according to claim 1 or 2, wherein said resting wall (17) has a width (y1) which is bounded, along the transversal axis (Y), by a first edge (14) and a second edge (15); wherein, the supporting portion (11) is connected to the attaching portion (10) by means of a connecting portion (13) extending along the first edge (14).

4. A door panel according to claim 3, wherein one or more of said first grooves (25) extends to a distance 80% greater than the width (y1) of the resting wall (17).

5. A door panel according to claim 3 or 4, wherein one or more of said first grooves (25) extends to a distance 90% greater than the width (y1) of the resting wall (17).

6. A door panel according to any preceding claim, wherein the lightening pattern (26) comprises one or more second grooves (27), each of which crosses a respective portion of the connecting portion (13).

7. A door panel according to claim 6, wherein a first groove (25) and a respective second groove (27) cross each other forming a comma-shaped cut.

8. A door panel according to claim 6 or 7, wherein said second grooves (27) cross determined areas of the attaching portion (10).

9. A door panel according to any claim from 6 to 8, wherein said second grooves (27) are, at least partially, circular in shape.

10. A door panel according to any preceding claim, wherein each first groove (25) or second groove (27) of said lightening pattern (26) is chosen from a group of grooves differing in shape, size and inclination with respect to the longitudinal axis (X); wherein, said lightening pattern (26) comprises a plurality of first grooves (25) distributed along the longitudinal axis (X); wherein two or more of said first grooves (25) are different from each other.

11. A vehicle comprising a car door (5), which comprises, in turn, a load-bearing structure and a door panel (6) according to any preceding claim.
